# EUROPÄISCHE PATENTSCHRIFT

(11) **EP 1 765 935 B1**
(45) Veröffentlichungstag und Bekanntmachung des Hinweises auf die Patenterteilung: **10.10.2012**
(21) Anmeldenummer: 05754467.8
(22) Anmeldetag: 07.07.2005
(51) Int. Cl.: C09C 1/50

(54) **RUSSERZEUGER**
SOOT GENERATOR
GENERATEUR DE SUIE

(30) Priorität: 12.07.2004 EP 04405441
(43) Veröffentlichungstag der Anmeldung: 28.03.2007
(73) Patentinhaber: Matter Engineering AG, 5610 Wohlen (CH)
(72) Erfinder: MATTER, Ulrich, CH-5400 Baden (CH); MOSIMANN, Thomas, CH-5616 Meisterschwanden (CH); KASPER, Markus, CH-8967 Widen (CH); RINER, Michael, CH-5612 Villmergen (CH)
(74) Vertreter: Frei Patent Attorneys
(86) Internationale Anmeldenummer: PCT/CH2005/000390
(87) Internationale Veröffentlichungsnummer: WO 2006/005212

(56) Entgegenhaltungen:
- EP-A- 0 353 746
- EP-A- 1 055 877
- WO-A-2004/065494
- US-A- 4 164 540
- US-A- 4 267 160

## Beschreibung

Die Erfindung betrifft eine Vorrichtung zum Erzeugen von Russ mit reproduzierbaren Eigenschaften.

Russerzeuger, welche Russ mit reproduzierbaren Eigenschaften produzieren, werden zur Kalibrierung oder Justierung von Russpartikel-Messgeräten benötigt. Solche Russpartikel-Messgeräte werden beispielsweise zur Messung von Emissionseigenschaften von Verbrennungsmotoren, insbesondere Dieselmotoren verwender.

In der Schrift EP 1 055 877 wird ein solcher Russerzeuger beschrieben: In einem Brennraum wird mittels einem Brenngas und einem Oxidationsgas eine Russpartikel erzeugende Diffusionsflamme gebildet. Der Brennraum mündet in eine Russwegführleitung, in welcher die Russpartikel weggeführt werden. Die Russwegführleitung besitzt eine weitere Einmündung, in welche Löschgas zuführbar ist, mit welchem Brennvorgänge in der Russwegführleitung erstickt werden. Dadurch wird erreicht, dass Veränderungen der Strömungsverhältnisse in der Russwegführleitung stromabwärts von der weiteren Einmündung keinen nennenswerten Einfluss die Eigenschaften der erzeugten Russpartikel haben.

Eine Weiterentwicklung dieses Russerzeugers ist in der Schrift WO 2004/065494 offenbart, welche nach dem Prioritätstag des vorliegenden Schutzrechts veröffentlicht wurde. In diesem Russerzeuger wird Umgebungsluft angesogen, indem die Russwegführleitung in der Umgebung der Brennraum-Einmündung in der Art einer Venturidüse verengt ist. Durch den Löschgasfluss entsteht ein Unterdruck, welcher ein Ansaugen der Luft bewirkt. Indem mit der Luft der Verbrennungssauerstoff von der Umgebung angesaugt wird und nicht eingeblasen werden muss, wird eine besonders kompakte Bauweise möglich.

Einen weiteren Russerzeuger zeigt das US Patent 4,267,160, wo Brennstoff mit Luft gemischt und in einem Vorreaktor teilweise verbrannt wird, worauf es in einen Reaktionsraum gelangt, um Russ zu bilden.

Bei allen drei offenbarten Russerzeugern stellt sich das Problem, dass die Eigenschaften der Russpartikel nicht ortsunabhängig in dem Sinn sind, dass unter verschiedenen äusseren Bedingungen - bspw. auf verschiedenen Höhen - die gleichen Partikelverteilungen erzeugt. Dies weil der Russbildungsprozess unter anderem von der mittleren freien Weglänge der Gasmoleküle abhängt. Bei der Russherstellung für industrielle Zwecke (wie in US Patent 4,267,160) ist dieser Nachteil nicht sehr erheblich, aber wenn es um die Kalibrierung von Russpartikel-Messgeräten geht, ist er wesentlich. Es wäre wünschenswert, wenn er unter verschiedenen äusseren Bedingungen - bspw. auf verschiedenen Meereshöhen oder bei verschiedenen Wetterlagen- die gleichen Partikelverteilungen erzeugt werden. Für manche Anwendungen ist auch notwendig, dass der erzeugte Russ nicht nur reproduzierbare, sondern auch einstellbare Eigenschaften - bspw. bezüglich Grössenverteilung - hat. Zwar lassen sich verschiedene Russpartikel-Grössenverteilungen erwirken, indem bspw. die Zusammensetzung des Brenngases bzw. dessen Verdünnung mit Inertgas oder dessen Fluss variiert oder das Brenngas durch einen flüssigen, fein zerstäubten Brennstoff gebildet wird. Zusätzliche Variationsmöglichkeiten wären aber wünschenswert.

Zum Ausgleich von Schwankungen im Atmosphärendruck wird in WO 2004/065494 vorgeschlagen, die Beschaffenheit der Verengung zu variieren und dadurch den Unterdruck zu variieren. Dieses Vorgehen erlaubt aber nur eine beschränkte Kontrolle über die vorherrschenden Bedingungen. Eine weiter gehende Kontrolle wäre aber wünschenswert.

Es wäre auch wünschenswert, einen Russerzeuger zur Verfügung zu haben, welcher auch für andere Anwendungen als die Kalibrierung von Russpartikel-Messgeräten geeignet ist.

Aufgabe der Erfindung ist daher, eine Vorrichtung und ein Verfahren zum Erzeugen von Russpartikeln mit reproduzierbaren Eigenschaften zur Verfügung zu stellen, welches Nachteile von bestehenden Vorrichtungen und Verfahren überwindet und insbesondere die Bildung von Russ mit einstellbaren Eigenschaften ermöglichen sollte und/oder welche für Anwendungen geeignet ist, die über die Kalibrierung von Russpartikel-Messgeräten hinausgeht. Zu diesem Zweck sollte die Vorrichtung das Darstellen eines Gases ermöglichen, das Russpartikel mit definierten Eigenschaften und in einer definierten Menge oder Konzentration als Schwebeteilchen enthält.

Diese Aufgabe wird gelöst durch die Erfindung, wie sie in den Patentansprüchen definiert ist.

Die Vorrichtung besitzt einen Innenraum, in welchem die Russpartikel hergestellt werden. Der Innenraum ist von der Umgebung entkoppelt in dem Sinn, dass die Zu- und Abführung von Gasen (und damit auch in diesen suspendierten Schwebeteilchen) vollständig regelbar ist. Daher ist der Innenraum auch mit einem vom Atmosphärendruck verschiedenen Druck beaufschlagbar. Es können definierte Gasvolumina vom Innenraum nach draussen - bspw. an eine Messanordnung bzw. einen durch eine Messanordnung definierten Aussenraum - überführt werden. Dies ermöglicht im Unterschied zum bekannten Stand der Technik sowohl die Betriebsparameter bei der Russerzeugung als auch die Entnahme frei, reproduzierbar und unabhängig voneinander festzulegen. Dies im Unterschied zum Stand der Technik, wo die Strömung in der Russwegführleitung einen direkten Einfluss auf die Druckverhältnisse im Reaktionsraum (bspw. Brennraum) hat und wo die Menge des weggeführten russhaltigen Gases einen Einfluss auf die Druckverhältnisse am Ort der Russerzeugung haben kann.

Der Innenraum ist also ein abgeschlossenes System, bei dem die Gaszuführungen und -wegführungen regelbar sind.

Dieses Vorgehen beruht unter anderem auf der gewonnenen Erkenntnis, dass wesentliche Eigenschaften der Russpartikel kritisch von dem im Brennraum herrschenden Druck abhängen. Beispielsweise lässt sich die mittlere Partikelgrösse durch Druckänderungen der Grössenordnung 100 mbar rasch um einen Faktor 1.5 bis 2 variieren. Der Druck im Innenraum kann also zum bei Bedarf systematischen Variieren der Partikel-Grössenverteilung und ggf. anderer Partikeleigenschaften wie der Standardabweichung ihrer Grösse verwendet werden.

Gemäss einer ersten bevorzugten Ausführungsform enthält der Innenraum einen Brennraum, in welcher in an sich bekannter Art eine russerzeugende Flamme, bspw. eine Diffusionsflamme aufrecht erhalten werden kann. In den Brennraum sind Brennstoff und Oxidationsgas zuführbar, durch welche die Flamme genährt wird und in welcher aufgrund von lokalem Sauerstoffmangel auch der Russ gebildet wird. Weiter beinhaltet der Innenraum gemäss dieser Ausführungsform eine Russwegführung, die mit dem Brennraum gekoppelt ist indem sie bspw. eine Einmündung aus diesem aufweist, wobei die Russwegführung zusätzlich eine Einmündung für ein Löschgas besitzt.

Gemäss einer zweiten bevorzugten Ausführungsform wird im Innenraum der Russ durch Pyrolyse hergestellt. Dem Innenraum wird ein Brennstoff-Trägergas-Gemisch zugeführt (das Mischen kann auch im Innenraum selbst erfolgen), wobei der Innenraum in geeigneter Weise beheizt wird, bspw. durch ein elektrisches Heizen der Innenraum-Wandung. Das Trägergas ist vorzugsweise frei von molekularem Sauerstoff oder arm an Sauerstoff. Es kann bspw. im Wesentlichen aus Argon, einem anderen Edelgas, je nach Pyrolyse-Temperatur auch aus molekularem Stickstoff oder aus einem Gemisch dieser Gase bestehen. Als Brennstoff kommen Kohlenwasserstoffe in Frage, die bei Raumtemperatur gasförmig oder auch flüssig sind, bspw. Toluol. Wenn der Brennstoff bei Raumtemperatur flüssig ist, wird er im Innenraum oder vor dem Einbringen in den Innenraum ausserhalb desselben zerstäubt oder verflüchtigt. Im Verlauf der Pyrolyse verklumpt der Kohlenstoff zu Primärpartikeln, die anschliessend durch Koagulation weiter wachsen. Die Grösse der Russpartikel hängt nebst den vorstehend bereits erwähnten Parametern Druck und Brensstoffkonzentration und -zusammensetzung natürlich auch von der Temperatur im Innenraum sowie von der Zeitdauer ab, während welcher die Kohlenstoffatome dieser Temperatur ausgesetzt sind. Um letzere zu regeln kann in an sich bekannter Art nach einer gewissen Zeit (bzw. in einer Durchström-Anordnung nach einer gewissen Strecke) ein Löschgas zugeführt werden, durch welches unter anderem die Gastemperatur abrupt gesenkt wird.

Die Russerzeugung im Innenraum kann auch durch eine Kombination von Pyrolyse und Verbrennung bewirkt werden, bspw. indem in einer ersten Kammer des Innenraums durch eine teilweise Verbrennung (d.h. eine Verbrennung unter Sauerstoffmangel) das Gas erhitzt wird und dann - den restlichen Brennstoff noch enthaltend - einer zweiten Kammer zugeführt wird, in welcher kein Sauerstoff vorhanden ist und in welcher die pyrolytischen Prozesse fortgeführt werden.

Schliesslich können die Russpartikel im Innenraum auch durch dispergieren von Russpulver oder durch eine andere an sich bekannte oder noch zu entwickelnde Methode erzeugt werden.

Gemäss einer bevorzugten Ausführungsform kann - bei jeder Art der Russerzeugung - der Druck im Innenraum innerhalb eines Bereiches beliebig eingestellt und geregelt werden. Man kann dabei den bei konstant gehaltenen anderen Parametern - bspw. bei konstant gehaltener Flamme - bestehenden Zusammenhang zwischen Druck und Grössenverteilung nutzen. Dies beispielsweise unter Zuhilfenahme einer diesen Zusammenhang quantitativ widerspiegelnden Tabelle oder charakteristischen Funktion (oder dergleichen). So lässt sich eine bestimmte, gewünschte Grössenverteilung einstellen. Diese Art der Steuerung der Russpartikeleigenschaften ist einer Variation mittels veränderter Flammeneigenschaften im Allgemeinen vorzuziehen.

Das System kann bspw. so ausgebildet sein, das der Druck innerhalb eines Bereiches von 200 mbar Unterdruck (im Vergleich zum Atmosphärendruck) bis 500 mbar Überdruck gewählt werden kann. Es sind aber auch grössere Druckdifferenzen möglich.

Anstelle einer Regelung des Druckes kann der Druck im Innenraum auch einfach gemessen und anhand der Tabelle oder charakteristischen Funktion auch der Einfluss der entstandenen Grössenverteilung auf die nachfolgende Messung (Kalibrierung, Filtertest etc.) rechnerisch korrigiert werden.

Der erfindungsgemässe Ansatz mit einem nicht-offenen Ausgang der Russwegführung ermöglicht, dass der Russerzeuger auch neuen Anwendungen zur Verfügung steht. Beispielsweise beim Testen oder Prüfen von Filtern oder Filterelementen muss das Testgas mit Druck beaufschlagt werden, damit es den Filter/das Filterelement durchströmt; ausserdem ist dieser Druck unter Umständen während eines Testzyklus nicht konstant, wenn der Fluss konstant gehalten werden soll und der Filterwiderstand angesichts sich anlagernder Verschmutzungen im Lauf der Zeit zunimmt. Aus diesen Gründen kamen bisherige Russerzeuger für Tests sowie die Qualitätsprüfung von Filtern kaum in Frage. Stattdessen mussten Verbrennungsmotoren als Russerzeuger eingesetzt werden, was aus verschiedenen Gründen nachteilig ist. Der erfindungsgemässe Ansatz ermöglicht, dass ein Russerzeuger mit Flamme verwendet wird, wobei in der Brennkammer ein konstanter, nicht notwendigerweise dem Atmosphärendruck entsprechender Druck herrscht.

Für viele Anwendungen ist es wesentlich, dass bei der Überführung des russhaltigen Gases vom Innenraum nach draussen die Grössenverteilung und weitere Eigenschaften der Russpartikel nicht beeinträchtigt werden. Bei der Überführung über konventionelle Ventile bspw. können grössere Russpartikel durch Impaktion und kleine Russpartikel durch Diffusion verlorengehen - wobei ausserdem die Ventile rasch verschmutzen und unzuverlässig werden. Die Vorrichtung ist daher mit einer Einrichtung zum Überführen von definierten Volumina russhaltigen Gases vom Innenraum nach draussen vorgesehen. Gemäss einer bevorzugten Ausführungsform welche beruht diese auf folgendem Prinzip: Ein bestimmtes, im Vergleich zum Innenraumvolumen kleines Gasvolumen des Innenraums wird abgeschlossen und in einem geschlossenen Raum nach draussen transportiert, wo es bspw. an eine Wegführleitung abgegeben wird. Anschliessend wird der Vorgang beliebig oft wiederholt. Wesentlich ist in dieser Ausführungsform, dass dabei nie ein vollständiger Druckausgleich zwischen Innenraum und der Umgebung stattfinden kann, d.h. dass das Gasvolumen vom Innenraum abgeschlossen wird, bevor es mit dem Aussenraum in Kontakt kommt.

Einrichtungen, die dies ermöglichen, sind an sich bereits bekannt. Eine auf bereits realisierter Technologie beruhende Ausführungsform einer solchen Einrichtung ist ein sogenannter Rotationsverdünner (oder Karussellverdünner). Bei einem solchen Verdünner überführt eine mit Kavitäten versehene Scheibe kleine Rohgasvolumina nach draussen (Ein Rotationsverdünner - Typ MD19-2E - ist erhältlich bei der Patentanmelderin, der Matter Engineering AG; entsprechende Informationen findet man in Ch. Hueglin, L. Scherrer und H. Burtscher, J. Aersol Sci. 28, p.1049 (1997) oder direkt beim Hersteller). Als Alternative können auch rotierende Zylinder mit hin- und her bewegenden Kolben oder andere dem obigen Prinzip entsprechende Einrichtungen verwendet werden, beispielsweise mit anstelle einer Drehbewegung linear verschobenen, abgeschlossenen Volumina.

Die Wahl der genannten Einrichtung zum Überführen russhaltigen Gases vom Innenraum nach Draussen ist unabhängig von der Art der Russerzeugung. Gemäss einer alternativen Ausführungsform beinhaltet die Einrichtung eine kritische Düse (d.h. eine Düse mit Strömung im Überschallbereich) bzw. ein Nadelventil oder eine enge, in der Grösse vorzugsweise einstellbare Öffnung von der Art einer Irisblende. Düsen oder Nadelventile sind für Russpartikel im sub-Mikrometer-Bereich geeignet, welche sich in einer Strömung praktisch wie Gasteilchen verhalten, weshalb kaum eine Tendenz zur Impaktion besteht. Aufgrund der grossen Geschwindigkeiten in solchen Düsen/Ventilen wird auch kaum ein signifikanter Teilchenverlust durch Diffusion an eine adsorbierende Wand beobachtet.

Als zusätzliches bevorzugtes Merkmal kann - im Falle der Russerzeugung mittels einer Flamme - im Innenraum eine Anzündvorrichtung zum Anzünden der Flamme vorgesehen sein. Es hat sich gezeigt, dass eine solche Anzündvorrichtung ausserhalb des Brennraums in der Russwegführung oder in der Brenn- oder Oxidationsgaszuführung angeordnet werden kann. Vor dem Anzünden sorgt die natürlich eintretende Diffusion dafür, dass auch in diesen Fällen in der Umgebung der Anzündvorrichtung eine genügend hohe Konzentration an Brennstoff und Oxidationsgas vorhanden ist, um die Flamme zu zünden. Die Anordnung der Anzündvorrichtung ausserhalb des Brennraums ist sogar besonders bevorzugt, da die Strömungsverhältnisse im Brennraum nach Möglichkeit unbeeinflusst bleiben sollten, um nicht in deren Umgebung turbulente Strömungen zu bewirken, die die Reproduzierbarket der Russerzeugung gefährden könnten.

Im Folgenden werden Ausführungsbeispiele der Erfindung anhand von Zeichnungen detailliert beschrieben. In den Zeichnungen zeigen:
- Fig. 1 eine schematische, geschnittene Seitenansicht eines Ausführungsbeispiels der Erfindung.
- Fig. 2 ein Detail aus Fig. 1, wobei mögliche Anordnungen einer Anzündvorrichtung eingezeichnet sind.
- Fig. 3 sehr schematisch eine zum Rotationsverdünner alternative Einrichtung zum Überführen von russhaltigem Gas von der Innenseite nach draussen.
- Fig. 4 schematisch eine Filterkontrolleinrichtung.
- Fig. 5 ebenfalls schematisch eine Filterprüfeinrichtung.
- Fig. 6 eine Kalibrierungsanordnung für einen 'Constant Volume Sampler' CVS.
- Fig. 7 ein alternatives Ausführungsbeispiel der Erfindung, ebenfalls in einer schematischen Darstellung.

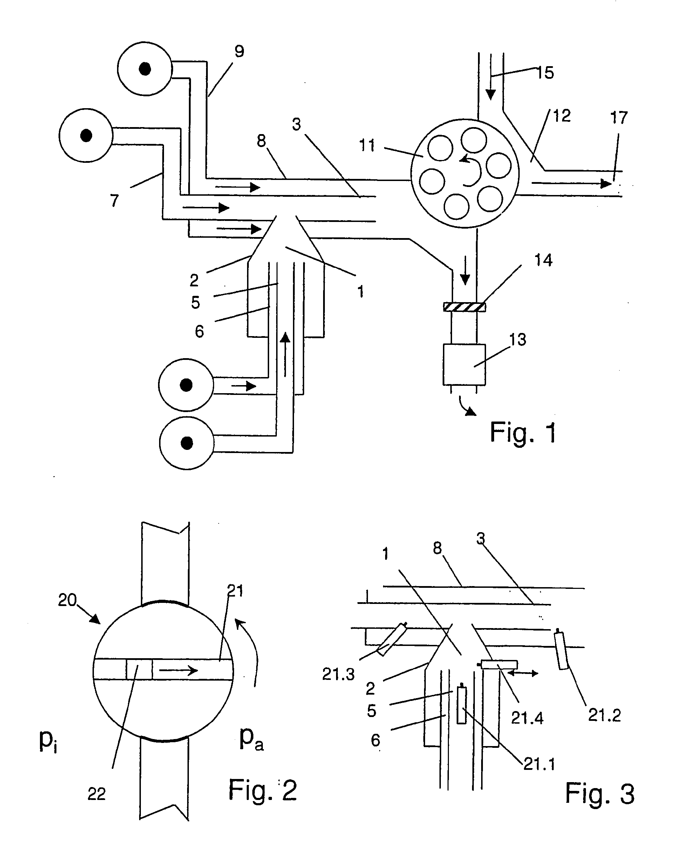

Die in Fig. 1 dargestellte Vorrichtung weist einen Brenner mit einem Brennraum 1 auf, welcher in eine ungefähr senkrecht zum Brennraumgehäuse 2 verlaufende Russwegführleitung 3 mündet. In den Brennraum münden je eine ungefähr vertikal verlaufende Brennstoff-(vorzugsweise Brenngas-)Zuleitung 5 und eine Oxidationsgaszuleitung 6, wobei Brennstoffzuleitung und Oxidationsgaszuleitung bspw. koaxial angeordnet sind. Diese Anordnung mit ungemischt dem Ort der vorgesehenen Flamme zugeführten Brenn- und Oxidationsgasen wird Diffusionsflammen verwendet, bei denen sich Brenn- und Oxidationsgase erst in der Flamme durch Diffusion vermischen. Die Erfindung ist ebensogut geeignet für andere Flammentypen, bspw. vorgemischte Flammen, denen ein bereits gemischtes Brennstoff-/Oxidationsgasgemisch zugeführt wird.

In die Russwegführleitung 3 mündet auch eine Löschgaszuleitung 7. Als Löschgas wird bspw. ein chemisch inertes Gas wie Stickstoff oder ein Edelgas verwendet. Auch die Verwendung von Luft ist möglich, da aufgrund der hohen Aktivierungsenergie von Kohlenstoffverbindungen Brenn- oder Umwandlungsprozesse schon allein aufgrund der Kühlwirkung des Löschgases unterbunden werden. Die Russwegführleitung 3 hat ein offenes Rohrende und verläuft koaxial zu einem sie umgebenden Mantelrohr 8, in welches eine Verdünnungsgas-Zuleitung 9 mündet. Der Brenner ist in dieser Ausführungsform insgesamt ähnlich dem in der Schrift EP 1 055 877 A, insbesondere in Spalte 5, Zeile 27-Spalte 9, Zeile 44 beschriebenen Brenner. Bezüglich des Aufbaus und Funktionsprinzip des Brenners sowie bezüglich der verwendbaren Brennstoffe, Oxidationsgase, Löschgase und diesen beizumischender Gase und Verdünnungsgase wird hier ausdrücklich auf diese Druckschrift verwiesen, wobei bei der hier beschriebenen Vorrichtung die Brenneraustrittsöffnung durch andere, im folgenden beschriebene Einrichtungen ersetzt ist.

In Strömungsrichtung unterhalb des offenen Endes der Russwegführleitung 3 ist entlang der oder anschliessend an die durch die Fortsetzung des Mantelrohrs 8 (die Distanzen in der Figur sind nicht massstäblich dargestellt) ein in der Figur nur sehr schematisch gezeichneter Rotationsverdünner 11 angeordnet. Mit diesem werden kleine Volumina des in der Wegführleitung vorhandenen russhaltigen Gases von dieser in eine Messleitung 12 transferiert. Die überführten Volumina werden dabei pneumatisch von der Wegführleitung entkoppelt. Die Messleitung kann optional zusätzlich zum transferierten russhaltigen Gas mit verdünnendem Mess-Trägergas gespeist werden; der entsprechende Gasfluss wird durch einen Pfeil 15 angedeutet dargestellt. Anschliessend an die Messleitung 12 bzw. den Ausgang 17 der Vorrichtung können Mess- oder Testanordnungen angeordnet sein, wie das weiter unten noch erläutert werden wird.

Nicht mit dem Rotationsverdünner überführtes Gas wird über einen Strang der Wegführleitung über ein Drosselelement 13 abgeführt. Dem Drosselelement kann ein Filterelement 14 vorgeschaltet sein, damit das Drosselelement 13 nicht rasch verrusst. Andere Ausgestaltungen der Wegführungen sind selbstverständlich denkbar und je nach Spezifikation vorteilhaft; beispielsweise kann sich die Wegführleitung vor dem Rotationsverdünner verzeigen, wobei nur (kleinerer) Teil des russhaltigen Gases bspw. durch eine kleine Förderpumpe mit vorgeschaltetem Filter gefördert über einen Wegführleitungsstrang am Rotationsverdünner vorbeigeführt wird, während der anderer Teil des Gases über den anderen Wegführleitungsstrang durch Filter 14 und Drosselelement 13 abgeführt wird.

Der Brennraum, die Russwegführleitung, das sie umgebende Mantelrohr, die Wegführleitung (bis zum Rotationsverdünner bzw. dem Drosselelement) sowie die Zuführleitungen bilden zusammen einen Innenraum, welcher gegen aussen abgeschlossen ist. Für den Betrieb wird bspw. der Fluss der zugeführten Brenn-Oxidations- Lösch- und Verdünnungsgasmengen so eingestellt, dass die eine bezüglich der Menge des gebildeten Russes und der Laminarität der Strömung optimale Russbildung eintritt. Dann wird anhand zu einem früheren Zeitpunkt ermittelter Daten ein für die gewünschte Partikel-Grössenverteilung optimaler Betriebsdruck ausgewählt. Die durch das Drosselelement 13 abgeführte Gasmenge wird durch Regelmittel so geregelt, dass der gewünschte Betriebsdruck eintritt. Ein (nicht gezeichneter) Druckfühler im Innenraum liefert die dafür notwendigen Daten über den Druck. Die Steuerung der Russmenge erfolgt einerseits ggf. über das Verdünnungsverhältnis, andererseits über die Menge der mit dem Rotationsverdünner 11 übertragenen Gasmenge. Das Errechnen des optimalen Druckes und die Regelung desselben kann manuell, bspw. mit Hilfe einer Tabelle oder einer Kennlinie geschehen. Es ist aber auch möglich, die Ermittlung und/oder Steuerung des Druckes elektronisch, bspw. mit Hilfe eines Computers mit Benutzerinterface durchzuführen.

Es hat sich gezeigt, dass bei Kohlenwasserstoffgasen (bspw. Propan) als Brennstoff und getrockneter und gefilterter Umgebungsluft Luft als Oxidationsgas Partikel-Grössenverteilungen mit mittleren Partikelgrössen zwischen 30 nm und 250 nm erreichen lassen, wobei die Partikel umso grösser werden, je höher der Druck innerhalb des Brennraumes ist. Eine vergleichsweise moderate Druckerhöhung im 100 mbar kann schon ausreichen, um die mittlere Partikelgrösse von 50 nm auf 75 nm ansteigen zu lassen. Ausgangsseitig der Vorrichtung erreichte Partikelkonzentrationen betragen bspw. zwischen 10⁷ cm⁻³ und 10⁹ cm⁻³.

Anstelle des Rotationsverdünners können auch andere Einrichtungen zum Überführen von Gas vom Innenraum in eine vom Innenraum entkoppelte (Mess-) Leitung vorhanden sein. Die sehr schematische Illustration eines möglichen Prinzips findet man in Fig. 2. Das dort gezeichnete Verdünnungsgerät 20 besitzt zwischen dem Innenraum (Druck: pᵢ) und einem Aussenraum (Druck: pₐ) einen rotierenden Zylinder 21 mit einem innerhalb des Zylinders zwischen Anschlägen verschiebbaren Kolben 22. Jeweils nach Rotation des Zylinders um 180° wird der Kolben entlang des Zylinders von einem Anschlag zum anderen verschoben, wobei das im Zylinder befindliche Volumen auf der einen Seite ausgestossen wird und sich gleichzeitig auf der anderen Seite der Zylinder wieder mit russhaltigem Gas füllt. Wenn pᵢ> pₐ geschieht das Verschieben des Kolbens selbsttätig aufgrund der Druckdifferenz, andernfalls muss ein Antriebsmechanismus für den Kolben zur Verfügung gestellt werden. Die Kontrolle der übertragenen Menge erfolgt über die Rotationsgeschwindigkeit des Zylinders. Die Fachperson wird viele weitere Mechanismen kennen oder sich ausdenken können, welche den Transfer von einem Gasvolumen von einem Behälter in einen von diesem entkoppelten anderen Behälter ermöglicht.

Noch eine andere Ausführungsform sieht die Verwendung einer kritischen Düse oder eines Nadelventils (nicht gezeichnet) vor, mit welchem das partikelhaltige Gas mit hoher Geschwindigkeit nach draussen überführt wird. Auch die Verwendung einer kleinen Öffnung, bspw. die Öffnung einer Irisblende, durch die konstant partikelhaltiges Gas wegströmt, ist möglich.

In einem im Wesentlichen abgeschlossenen System stellt sich unter Umständen die Frage nach der Zündung der Flamme. Zwar sind Systeme zur automatischen, bspw. elektrisch betriebenen Zündung von Gasflammen an sich schon längst bekannt. Hier stellt sich aber das zusätzliche Problem, dass die Laminarität der Gasströmung in der Flamme, deren unmittelbaren Umgebung und überall sonst wo Verbrennungs- und Koagulationsprozesse oder andere die Russpartikeleigenschaften beeiflussende Prozesse stattfinden, gewährleistet sein muss. Es ist daher im Allgemeinen nicht möglich, eine übliche Zündkerze am Ort der Flamme zu plazieren, und Systeme gemäss dem Stand der Technik sehen daher von Einrichtungen zur elektrisch gesteuerten Zündung der Flamme ab.

Gemäss einer Ausführungsform der Erfindung besitzt die Vorrichtung eine Anzündvorrichtung zum Anzünden der Flamme im geschlossenen Innenraum. Die Anzündvorrichtung ist vorzugsweise ausserhalb des Brennraums angeordnet. Vier Beispiele für mögliche Anordnungen sind in Fig. 3 eingezeichnet. Es versteht sich, dass in Realität im Allgemeinen nicht wie in Fig. 3 gezeichnet alle vier Anzündvorrichtungen vorhanden sind, sondern vorzugsweise genau eine davon.

Eine erste mögliche Anordnung einer Anzündvorrichtung 21.1 ist in der Brennstoff- oder der Oxidationsgaszuführleitung. Auch beim Ausgang der Russwegführleitung 3 - also dort, wo sich das russhaltige mit Löschgas vermischte Verbrennungsprodukt mit dem Verdünnungsgas vermischt, kann eine Anzündvorrichtung 21.2 angeordnet sein. Eine weitere mögliche Anordnung einer Anzündvorrichtung 21.3 ist innerhalb der Löschgaszuführung, stromaufwärts von der Mündung der Brennkammer 1. Die Anzündvorrichtung kann durch entsprechend vorgesehene Öffnungen von aussen in den Innenraum hineinragen, wie das in zwei Fällen (entsprechend Vorrichtungen 21.2 und 21.3) gezeichnet ist und sie kann gemäss dem Prinzip einer Zündkerze elektrisch betätigbar sein. Sie kann alternativ dazu auch auf einem katalytischen Prinzip basieren und bspw. eine katalytisch aktive grosse Platinoberfläche aufweisen.

In allen gezeichneten Fällen ist die Anzündvorrichtung von der Brennkammer weg und so angeordnet, dass im Bereich, in welchem Russpartikel entstehen und sich chemisch oder physikalisch (Koagulation) verändern können die laminare Strömung nicht beeinträchtigt ist. Trotzdem hat es sich gezeigt, dass ein Anzünden möglich ist, aufgrund der vor der Verbrennung entstehenden Diffusionsprozesse.

Alternativ zu den vorstehend beschriebenen Anordnungen kann auch eine mechanisch verschiebbare Anzündvorrichtung vorgesehen sein. Ein entsprechendes Beispiel ist die vierte gezeichnete Anzündvorrichtung 21.4. Diese Anzündvorrichtung 21.4 ragt durch eine Öffnung des Brennraums 1 in diesen hinein. Zum Anzünden wird sie in eine ungefähr der gezeichneten Lage entsprechenden Position geschoben. Anschliessend wird sie für einen störungsfreien Betrieb so weit zurückgezogen, dass die Strömungen im Brennraum 1 wieder laminar sind.

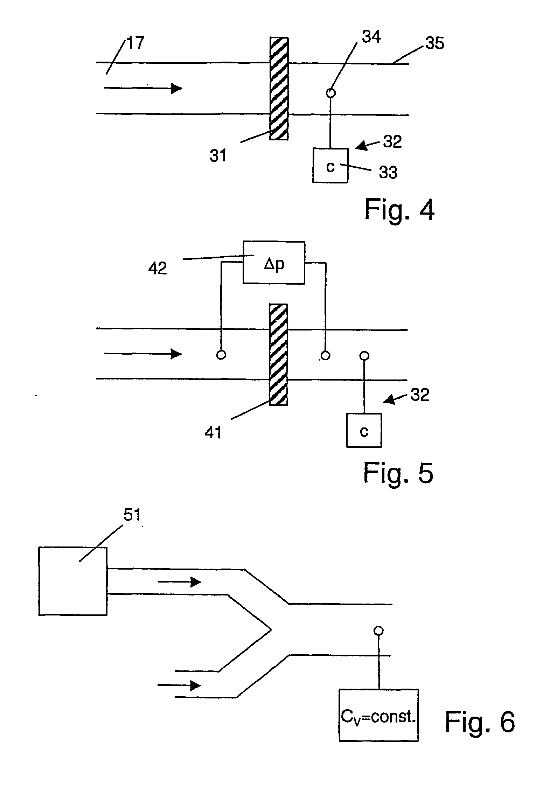

Fig. 4 zeigt eine Filter-Test- oder Kontrollanordnung, wie sie für die Qualitätskontrolle in der filterherstellenden Industrie verwendet werden kann. Der Ausgang 17 einer Vorrichtung der vorstehend beschriebenen Art wird mit Messstrecke mit Filter 31 verbunden. In Strömungsrichtung hinter dem Filter 31 ist eine Messanordnung 32 - hier eine Messapparatur 33 mit Messfühler 34 angebracht. Aufgrund des durch den Filter bewirkten Druckabfalls ist bei einem offenen Ausgang des Messrohres 35 der Druck höher als der Atmosphärendruck und bei sich änderndem Volumenstrom oder Filtereigenschaften nicht konstant. Das erfindungsgemässe Vorgehen erlaubt es trotzdem, Russ in einer bekannten, meist kleinen, reproduzierbaren Menge mit bekannten, reproduzierbaren Eigenschaften (Partikelgrösse und/oder -zusammensetzung) in die Anordnung zu injizieren. Die durch die Messanordnung detektierte Partikelmenge und die Partikeleigenschaften sind dann für die Filtereigenschaften kennzeichnend. Messanordnungen zur Bestimmung von Partikelmengen und -eigenschaften, beruhend auf der Messung der Mobilität oder auf optischen, photoelektrischen, gravimetrischen oder anderen Prinzipien sind an sich bekannt und werden hier nicht im Detail erläutert; es wird auf die umfangreiche Fachliteratur verwiesen.

Die Anordnung gemäss Fig. 5 dient der Filterprüfung, wie sie bspw. bei der Entwicklung von Filtern oder Filterelementen zum Einsatz kommt. Testfilter 41 werden einer ausgiebigen Prüfung unterworfen, wobei der Filter auch grösseren, aber immer reproduzierbaren Mengen an Russ ausgesetzt wird. Zusätzlich zu einer Messanordnung 32 für die Partikeleigenschaften ist auch ein Druckmessgerät 42 eingezeichnet, welches den Druckabfall über dem Testfilter 41 -in Funktion des Volumenstroms und u.U. der bisher herausgefilterten Russmenge - ermittelt. Der Volumenstrom durch den Testfilter kann im Verlauf des ganzen Prüfvorganges variiert werden, und kann bspw. vergleichsweise hohe Werte von bis zu 1.5 m³/min oder mehr betragen. Der durch das Verdünnungsgerät - in dieser Ausführungsform vorzugsweise eine kritische Düse, ein Nadelventil oder eine Irisblende - diesem beigemischte Volumenstrom an russhaltigem Gas beträgt bspw. variierbar zwischen 0 und 30 l/min. Der Gesamtvolumenstrom - regelbar durch Steuerung der Trägergasmenge in der Messleitung 12 - und die Russmenge können also unabhängig voneinander eingestellt werden; ebenso kann unabhängig von den beiden Volumenströmen die Grössenverteilung der Russpartikel gesteuert werden. Dies alles wird möglich aufgrund der erfindungsgemässen pneumatischen Entkopplung des Russerzeuger-Innenraums.

Die erfindungsgemässe Vorrichtung lässt sich auch, nach einer Skalierung hin zu grösseren Dimensionen und grösserer Leistung, für die Kalibrierung von ganzen Anlagen - im Ggs. zu einzelnen Messaparaturen - bspw. von sog. 'Constant Volume Samplers' (CVS) verwenden. CVS-Anlagen kommen zur Anwendung bei der Prüfung von Emissionseigenschaften von Verbrennungsmotoren in Abgängigkeit von der Belastung. Mit ihnen wird die Partikelemission in Abhängigkeit der Motorenleistung, also bspw. der gefahrenen Kilometer oder der geleisteten Kilowattstunden bestimmt. In einem CVS wird ein variierender partikelhaltiger Abgasstrom mit so mit Verdünnungsgas versetzt, dass der resultierende Volumenstrom konstant ist. Die Partikelkonzentration im Volumenstrom ist dann ein Mass für die Gesamtpartikelemissionsmenge.

Gemäss einem Aspekt der Erfindung wird eine erfindungsgemässe Vorrichtung zum Erzeugen von Russ mit Brennraum und darin befindlicher, Russ erzeugender Flamme anstelle des Verbrennungsmotors oder eines Fahrzeuges mit Verbrennungsmotor mit dem Eingang einer solchen Anlage verbunden. Der erfindungsgemässe Ansatz erlaubt bei einer konstant brennenden Flamme einer - entsprechend gross dimensionierten - Vorrichtung 51 der erfindungsgemässen Art einen in Partikelmenge und ggf. -konzentration variierenden Gasstrom zu erzeugen, wobei die Partikelgrössenverteilung unabhängig von der Menge ist. Wenn man die Emission eines Verbrennungsmotors simulieren möchte, ist es unter Umständen notwendig, den russhaltigen Gasstrom mit Druck in die Anlage zu injizieren, wie das auch durch einen unter Last stehenden Verbrennungsmotor geschieht. Auch dies ist nur möglich durch die erfindungsgemässe Entkopplung von Vorrichtungsinnenraum und Umgebung.

Die Verwendung eines Russerzeugers mit Flamme zum Kalibrieren oder Testen von Grossanlagen für die Emissionsmessung ist ein weiterer durch die Erfindung neu hinzugekommener Aspekt.

Die vorstehend beschriebenen Ausführungsformen der Erfindung sind blosse Beispiele und können in mancher Hinsicht abgeändert werden. So ist bspw. die Form des Brenners keineswegs auf die gezeichnete Form beschränkt. Zwar ist eine T-förmige Anordnung mit vertikalem Brennraum und horizontaler Russwegführung in mancher Hinsicht vorteilhaft aber keineswegs notwendig. Auch vollständig vertikale Anordnungen mit einem Brennraum, der direkt in eine ebenfalls horizontal verlaufende Russwegführung übergeht, sind denkbar. Zudem können auch andere Formen der Russerzeugung zur Anwendung gelangen, bspw. Pyrolyse. Wie bereits erwähnt sind auch für das Verdünnungsgerät bzw. allgemein das Mittel zum Überführen geregelter Mengen russhaltigen Gases nach draussen viele verschiedene Lösungen denkbar. Wesentlich ist lediglich der von der Umwelt abgekoppelte Brenn- bzw. Russerzeugungsraum.

Weiter können nebst dem Druck oder anstelle des Drucks zusätzliche Regelungsparameter zu Einstellung gewünschter Partikelverteilungen verwendet werden, bspw. ein Brenngasgemisch oder dessen Verdünnung mit Inertgas, das Verhältnis Brenngas/Oxidationsgas oder andere. Die Einstellung des Drucks muss nicht notwendigerweise (allein) durch ein Drosselelement 13 geschehen sondern kann ebenfalls anders erfolgen, bspw. über die Menge des zugeführten Löschgases etc.

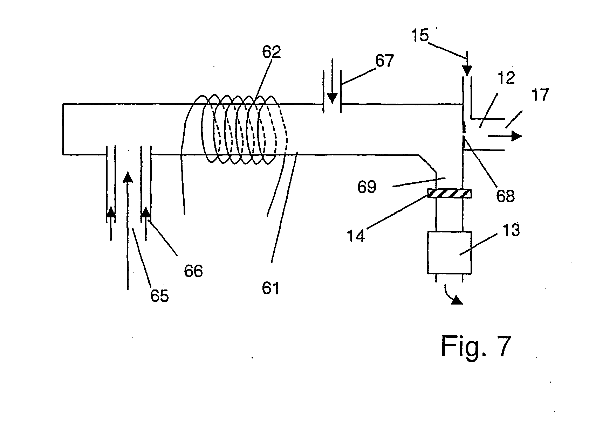

Die in Fig. 7 dargestellte Vorrichtung ist dafür vorgesehen, ein russhaltiges Gas durch Pyrolyse darzustellen und in definierten Mengen in einen Aussenraum zu überführen. Die Vorrichtung weist ein Pyrolyserohr 61 auf, welches aus einem hitzebständigen Material (bspw. aus Molybdän, Tantal, Wolfram oder keramischen Materialien) gefertigt ist. Anstelle eines Rohrs sind selbstverständlich auch andere Behältnisformen denkbar, anstelle eines Pyrolyserohrs ist dann ganz allgemein eine Pyrolysekammer vorhanden. Weiter weist die Vorrichtung Mittel auf, das Pyrolyserohr (bzw. die Pyrolysekammer) mindestens bereichsweise zu beheizen, bspw. über eine Elektroheizung 62, die einen Bereich der Rohrwandung erwärmt. In das Pyroyserohr münden je eine Brennstoffzuleitung 65 und eine Trägergaszuleitung 66, wobei Brennstoffzuleitung und Trägergaszuleitung in der gezeichneten Ausführungsform koaxial angeordnet sind. Als Brennstoff wird bspw. ein Kohlenwasserstoff verwendet, als Trägergas vorzugsweise ein Edelgas, insbesondere Argon, allerdings ist auch die Verwendung anderer Inertgase möglich, etwa Stickstoff. Der Brennstoff und das Trägergas können auch vorgemischt in einer gemeinsamen Zuleitung in das Pyrolyserohr gelangen. Dies ist insbesondere für den Fall von bei Raumtemperatur flüssigen Brennstoffen (bspw. Toluol) bevorzugt. In besagtem Fall wird bspw. das Trägergas durch den Brennstoff durchströmen, bevor es in das Pyrolyserohr gelangt.

Im beheizten Bereich erwärmt sich das Brennstoff-Trägergasgemisch. Die Temperatur dieses Gemischs wird durch die Grösse des beheizten Bereichs der Rohrwandung - sowie ggf. eventuelle oberflächenvergrössemde Strukturen, bspw. Rippenstrukturen -, deren Temperatur sowie die Durchströmgeschwindigkeit bestimmt. Im Innern des Pyrolyserohrs (der Pyrolysekammer) ist bspw. ein - nicht dargestellter - Temperaturfühler vorhanden. Die Vorrichtung kann bspw. so betrieben werden, dass die Temperatur des Brennstoff-Trägergasgemischs zwischen 1000°C und 1400°C, besonders bevorzugt zwischen 1100°C und 1300°C erreicht. Diesen Temperaturen halten die C-H-Bindungen nicht stand, und es können sich Kohlenstoff-Konglomerate bilden, die zu Russpartikeln koagulieren.

In das Pyrolyserohr 61 mündet auch eine Löschgaszuleitung 67. Als Löschgas wird bspw. ein chemisch inertes Gas wie Stickstoff oder ebenfalls ein Edelgas (bspw. dasselbe wie das Trägergas) verwendet. Auch die Verwendung von Luft ist möglich, da aufgrund der hohen Aktivierungsenergie von Kohlenstoffverbindungen Brenn- oder Umwandlungsprozesse schon allein aufgrund der Kühlwirkung des Löschgases unterbunden werden. Die Anordnung ist mit Vorteil so, dass das Brennstoff-Trägergas-Gemisch zuerst einen beheizten Bereich des Pyrolyserohrs 61 durchströmt, bevor es zur Einmündung der Löschgaszuleitung gelangt.

Gemäss einer Variante der beschriebenen Ausführungsform kann die Löschgaszuleitung 67 auch entfallen. Stattdessen kann bspw. das Pyrolyserohr oder ein daran anschliessender Teil des Innenraums auch aktiv gekühlt sein.

In Strömungsrichtung unterhalb der Einmündung der Löschgaszuleitung weist die Vorrichtung eine Einrichtung zum Überführen definierter Gasvolumina vom Innenraum in einen Aussenraum auf. Im gezeichneten Ausführungsbeispiel beinhaltet diese eine Irisblende 68, deren Öffnung regelbar ist und mit der bspw. stossweise durch Kontrollmittel (nicht gezeichnet) aktiviert Russgasswölkchen nach draussen abführbar sind. Im gezeichneten Beispiel werden die definierten Volumina in eine Messleitung 12 transferiert. Die Messleitung kann optional zusätzlich zum transferierten russhaltigen Gas mit verdünnendem Mess-Trägergas (dieses kann Luft sein) gespeist werden; der entsprechende Gasfluss wird durch einen Pfeil 15 angedeutet dargestellt. Anschliessend an die Messleitung 12 bzw. den Ausgang 17 der Vorrichtung können wie im vorstehenden Beispiel Mess- oder Testanordnungen angeordnet sein.

Nicht überführtes Gas wird über ein Drosselelement 13 mit vorgeschaltetem Filterelement abgeführt. Auch in diesem Ausführungsbeispiel sind andere Ausgestaltungen der Wegführungen denkbar.

Das Pyrolyserohr inklusive wegführendem Strang 69 zum Drosselelement hin sowie die Zuführleitungen 65, 66, 67 bilden zusammen einen Innenraum, welcher gegen aussen abgeschlossen ist. Der abgeschlossene Innenraum kann mit einem gewünschten Druck beaufschlagt werden, und es können über die Einrichtung (hier: Irisblende 68) zum Überführen von Gasvolumina definierte Mengen russhaltigen Gases vom Innenraum an einen gewünschten Aussenraum (hier: Messleitung 12) überführt werden.

Auch in diesem Ausführungsbesipiel wird für den Betrieb bspw. der Fluss der zugeführten Brenn- Träger- Lösch- und Verdünnungsgasmengen so eingestellt, dass die eine bezüglich der Menge des gebildeten Russes und der Laminarität der Strömung optimale Russbildung eintritt. Dann wird anhand zu einem früheren Zeitpunkt ermittelter Daten ein für die gewünschte Partikel-Grössenverteilung optimaler Betriebsdruck ausgewählt. Auch für die in Fig. 7 gezeichnete Ausführungsform mit auf Pyrolyse basierender Russbildung hängt die Grössenverteilung der hergestellten Partikel vom Druck im Innenraum ab, da die sich dort abspielenden Prozesse (insbesondere die Koagulation) von der mittleren freien Weglänge im Gas beeinflusst werden.

Die durch das Drosselelement 13 abgeführte Gasmenge wird demnach durch Regelmittel so geregelt, dass der gewünschte Betriebsdruck eintritt. Ein (nicht gezeichneter) Druckfühler im Innenraum liefert die dafür notwendigen Daten über den Druck. Die Steuerung der Russmenge erfolgt einerseits ggf. über das Verdünnungsverhältnis, andererseits über die Menge nach draussen überführten Gasmenge. Das Errechnen des optimalen Druckes und die Regelung desselben kann manuell, bspw. mit Hilfe einer Tabelle oder einer Kennlinie geschehen. Es ist aber auch möglich, die Ermittlung und/oder Steuerung des Druckes elektronisch, bspw. mit Hilfe eines Computers mit Benutzerinterface durchzuführen.

Es ist für sämtliche Ausführungsbeispiele auch ein Betrieb denkbar, in welchem der Innendruck nicht geregelt und konstant gehalten, sondern lediglich gemessen wird. Die Abghängigkeit der Partikel-Grössenverteilung vom Druck kann dann rechnerisch korrigiert werden, bspw. ebenfalls mit Hilfe einer Kennlinie oder Tabelle bzw. mit Hilfe einer implizit oder explizit bekannten Funktion. Obwohl diese Ausführungsform die Vorteile eines Betriebs bei konstantem Druck nicht aufweist und daher eine erhöhte Rechenleistung für die Auswertung benötigt und eventuell weitere Unsicherheiten mit sich bringt, so besitzt sie doch auch den Vorteil, dass definierte Gasmengen mit definierten Eigenschaften vom Innenraum in eine druckmässig entkoppelte Messanordnung überführbar sind.

Abweichend von den beschriebenen Ausführungsbeispielen kann der erfindungsgemässe Ansatz auch auf weitere Methoden der Russerzeugung in einem Innenraum ausgedehnt werden, bspw. wie vorstehend erwähnt Kombinationen von (unterstöchiometrischer) Verbrennung und Pyrolyse, ggf. örtlich getrennt in unterschiedlichen Kammern. Auch das Dispergieren von Russpulver oder andere physikalische und/oder chemische Prozesse sind denkbar.

## Patentansprüche

1. Vorrichtung zum Erzeugen von Russ mit definierten Eigenschaften für Mess- oder Kalibrierungszwecke, mit einem Innenraum, welcher Mittel zum Herstellen von Russpartikeln aus einem Brennstoff und zum Darstellen eines diese Russpartikel enthaltenden Gases aufweist, **dadurch gekennzeichnet, dass** der Innenraum von der Umgebung entkoppelt ist, so dass er mit einem vom Atmosphärendruck verschiedenen Druck beaufschlagbar ist und dass ein Mittel zum Überführen definierter Gasvolumina vom Innenraum in eine Messanordnung vorhanden ist.

2. Vorrichtung nach Anspruch 1, **dadurch gekennzeichnet, dass** der Innenraum einen Brennraum (1) umfasst, zu welchem der Brennstoff sowie Oxidationsgas zuführbar sind und in welchem eine Russpartikel erzeugende, vom Brennstoff und vom Oxidationsgas genährte Flamme gebildet werden kann, und dass der Innenraum weiter eine mit dem Brennraum gekoppelten Russwegführung (3) umfasst, wobei der Russwegführung ein Löschgas zuführbar ist.

3. Vorrichtung nach Anspruch 2, **gekennzeichnet durch** eine Anzündvorrichtung (21.1, 21.2, 21.3) zum Anzünden der Flamme im Innenraum.

4. Vorrichtung nach Anspruch 3, **dadurch gekennzeichnet, dass** die Anzündvorrichtung ausserhalb des Brennraumes in der Russwegführung, der Löschgaszuführung oder in der Brenngas- und/oder Oxidationsgaszuführung angeordnet ist.

5. Vorrichtung nach Anspruch 1, **dadurch gekennzeichnet, dass** der Innenraum durch eine Innenraum-Wandung begrenzt wird und dass Mittel zum mindestens stellenweisen Beheizen der Innenraum-Wandung vorhanden sind, so, dass die Russpartikel im Innenraum durch Pyrolyse gebildet werden können.

6. Vorrichtung nach Anspruch 5, **dadurch gekennzeichnet, dass** der Innenraum frei von Sauerstoffzuführungen ist.

7. Vorrichtung nach Anspruch 1, **dadurch gekennzeichnet, dass** der Innenraum Mittel zum Dispergieren von Russpulver beinhaltet.

8. Vorrichtung nach einem der vorangehenden Ansprüche, **dadurch gekennzeichnet, dass** das Mittel zum Überführen definierter Gasvolumina ein Verdünnungsgerät (11, 20) beinhaltet.

9. Vorrichtung nach Anspruch 8, **dadurch gekennzeichnet, dass** das Verdünnungsgerät ein Karussell-Verdünner (11) ist:

10. Vorrichtung nach einem der vorangehenden Ansprüche, **dadurch gekennzeichnet dass** das Mittel zum Überführen definierter Gasvolumina eine kritische Düse, ein Nadelventil oder eine Irisblende umfasst.

11. Vorrichtung nach einem der vorangehenden Ansprüche, **gekennzeichnet durch** Regelmittel zum Einstellen eines geregelten Innendrucks.

12. Verfahren zum Darstellen eines Gases, das Russpartikel mit definierten Eigenschaften und in einer definierten Menge oder Konzentration als Schwebeteilchen enthält, für Mess- oder Kalibrierungszwecke wobei einem Innenraum ein Brennstoff und ein Trägergas zugeführt wird und im Innenraum aus dem Brennstoff in einem Gas schwebende Russpartikel erzeugt werden, **dadurch gekennzeichnet, dass** der Innenraum von der Umgebung entkoppelt ist, so dass er mit einem vom Atmosphärendruck verschiedenen Druck beaufschlagbar ist, und dass zum Darstellen des Gases mit Russpartikeln mit definierten Eigenschaften und in einer definierten Menge oder Konzentration definierte Gasvolumina vom Innenraum in eine Messanordnung überführt werden.

13. Verfahren nach Anspruch 12, **dadurch gekennzeichnet, dass** die Russpartikel erzeugt werden, indem der Brennstoff teilweise in einer Flamme im Innenraum verbrannt wird, wobei die Flamme vorzugsweise eine Diffusionsflamme ist.

14. Verfahren nach Anspruch 13, **dadurch gekennzeichnet, dass** die Flamme in einem Brennraum aufrecht erhalten wird, dass die erzeugten Russpartikel vom Brennraum in eine mit dem Brennraum gekoppelte Russwegführung (3) geführt werden und wobei der Russwegführung ein Löschgas zugeführt wird.

15. Verfahren nach Anspruch 12, **dadurch gekennzeichnet, dass** für das Erzeugen der Russpartikel der Brennstoff mit einem Trägergas vermischt wird und dieses so erhitzt wird, dass der Brennstoff pyrolysiert wird.

16. Verfahren nach Anspruch 15, **dadurch gekennzeichnet, dass** das Trägergas erhitzt wird, indem eine den Innenraum begrenzende Wandung mindestens stellenweise beheizt wird.

17. Verfahren nach Anspruch 12, **dadurch gekennzeichnet dass** für das Erzeugen der in einem Gas schwebenden Russpartikel Russpulver im Innenraum dispergiert wird.

18. Verfahren nach einem der Ansprüche 12 bis 17, **dadurch gekennzeichnet, dass** der Innenraum mit einem vom Atmosphärendruck verschiedenen Druck beaufschlagt wird, und dass dieser Druck geregelt wird.

19. Verfahren zum Testen von Filtern oder Filterelementen wobei mit einem Verfahren nach einem der Ansprüche 12 bis 18 ein Russpartikel enthaltendes Gas dargestellt und, gegebenenfalls unter Beimischung mindestens eines weiteren Gases, durch den zu testenden Filter oder das zu testende Filterelement geführt wird.

20. Verfahren nach Anspruch 19, **dadurch gekennzeichnet, dass** in Strömungsrichtung hinter dem Filter bzw. dem Filterelement die Russkonzentration im Gas gemessen wird.

21. Verfahren nach Anspruch 19 oder 20, **dadurch gekennzeichnet, dass** der durch den Filter bzw. das Filterelement erzeugte Druckabfall im Gasstrom gemessen wird.

## Claims

1. Device for the generation of soot with defined characteristics for measuring and calibrating purposes, with a hollow space, which comprises means for the generation of soot particles out of a fuel and for the production of a gas containing these soot particles, **characterised in that** the hollow space is decoupled from the ambient, so that it is capable of being impinged with a pressure differing from the atmospheric pressure and that a means for the transferring of defined gas volumes from the hollow space into a measuring arrangement is present.

2. Device in accordance with claim 1, **characterised in that** the hollow space comprises a combustion chamber (1), to which the fuel as well as oxidation gas are suppliable and in which a soot particle generating flame fed by the fuel and by the oxidation gas may be formed, and that the hollow space further comprises a soot removal conduit (3) coupled with the combustion chamber, wherein a quenching gas is suppliable to the soot removal conduit.

3. Device according to claim 2, **characterised by** an ignition device (21.1, 21.2, 21.3) for igniting the flame in the hollow space.

4. Device in accordance with claim 3, **characterised in that** the ignition device is arranged outside the combustion chamber in the soot removal conduit, the quenching gas supply line or in the fuel gas - and/or oxidation gas supply line.

5. Device according to claim 1, **characterised in that** the hollow space is bounded by a hollow space wall and that means for the heating of the hollow space walls at least in zones are present in such a manner, that the soot particles may be formed in the hollow space by pyrolysis.

6. Device in accordance with claim 5, **characterised in that** the hollow space is free of any oxygen supply lines.

7. Device according to claim 1, **characterised in that** the hollow space contains means for the dispersion of soot powder.

8. Device in accordance with one of the preceding claims, **characterised in that** the means for the transferring of defined gas volumes contains a dilution device (11,20).

9. Device according to claim 8, **characterised in that** the dilution device is a rotation diluter (11).

10. Device in accordance with one of the preceding claims, **characterised in that** the means for the transferring of defined gas volumes comprises a critical nozzle, a needle valve or an iris diaphragm.

11. Device according to one of the preceding claims, **characterised by** control means for the adjusting of a controlled internal pressure.

12. Method for the production of a gas, which contains soot particles with defined characteristics and in a defined quantity or concentration as suspended particles for measuring purposes or calibration purposes, wherein in a hollow space a fuel gas and a carrier gas are supplied and in the hollow space out of the fuel soot particles suspended in a gas are generated, **characterised in that** the hollow space is decoupled from he ambient, so that it is capable of being impinged by a pressure that is different from the ambient pressure, and that for the production of the gas with soot particles with defined characteristics and in a defined quantity or concentration defined gas volumes are transferred from the hollow space into a measuring arrangement.

13. Method according to claim 12, **characterised in that** the soot particles are generated, **in that** the fuel is in part combusted in a flame in the hollow space, wherein the flame in preference is a diffusion flame.

14. Method in accordance with claim 13, **characterised in that** the flame is maintained in a combustion chamber, that the generated gas particles are conducted from the combustion chamber into a soot removal conduit (3) coupled with the combustion chamber and wherein a quenching gas is supplied to the soot removal conduit.

15. Method according to claim 12, **characterised in that** for the generation of the soot particles the fuel is mixed with a carrier gas and this is heated up in such a manner, that the fuel is pyrolised.

16. Method in accordance with claim 15, **characterised in that** the carrier gas is heated up, **in that** a wall bounding the hollow space is heated at least in certain zones.

17. Method according to claim 12, **characterised in that** for the generation of soot particles suspended in a gas, soot powder is dispersed in the hollow space.

18. Method in accordance with one of the claims 12 to 17, **characterised in that** the hollow space is impinged with a pressure different from the atmospheric pressure, and that this pressure is controlled.

19. Method for the testing of filters and filter elements, wherein with a method according to one of the claims 12 to 18 a gas containing soot particles is produced and, if so required with the admixture of at least one further gas, is conducted through the filter to be tested or through the filter element to be tested.

20. Method in accordance with claim 19, **characterised in that** in the direction of flow behind the filter or the filter element, respectively, the soot concentration in the gas is measured.

21. Method according to claim 19 or 20, **characterised in that** the pressure drop produced by the filter or by the filter element, respectively in the gas flow is measured.

## Revendications

1. Dispositif de formation d'une suie présentant des propriétés définies dans un but de mesure ou d'étalonnage, le dispositif présentant un espace intérieur qui présente des moyens de formation de particules de suie à partir d'un combustible et de formation d'un gaz contenant ces particules de suie,
**caractérisé en ce que**
l'espace intérieur est découplé de l'environnement de telle sorte qu'une pression différente de la pression atmosphérique puisse y être appliquée et
**en ce qu'**il présente un moyen de transfert de volumes définis de gaz depuis l'espace intérieur jusque dans un agencement de mesure.

2. Dispositif selon la revendication 1, **caractérisé en ce que** l'espace intérieur comporte une chambre de combustion (1) dans laquelle le combustible ainsi qu'un gaz oxydant peuvent être transférés et dans lequel une flamme produisant des particules de suie et approchée du combustible et du gaz oxydant peut être formée et **en ce que** l'espace intérieur comporte en outre une évacuation (3) de suie couplée à la chambre de combustion, un gaz d'extinction pouvant être apporté dans l'évacuation de suie.

3. Dispositif selon la revendication 2, **caractérisé par** un dispositif d'allumage (21.1, 21.2, 21.3) qui allume la flamme dans l'espace intérieur.

4. Dispositif selon la revendication 3, **caractérisé en ce que** le dispositif d'allumage est disposé à l'extérieur de la chambre de combustion, dans l'évacuation de suie, dans l'amenée de gaz d'extinction, dans l'amenée de gaz combustible et/ou dans l'amenée de gaz oxydant.

5. Dispositif selon la revendication 1, **caractérisé en ce que** l'espace intérieur est délimité par une paroi d'espace intérieur et **en ce qu'**il présente des moyens qui permettent de chauffer au moins localement la paroi de l'espace intérieur de telle sorte que les particules de suie puissent être formées dans l'espace intérieur par pyrolyse.

6. Dispositif selon la revendication 5, **caractérisé en ce que** l'espace intérieur ne présente pas d'amenée d'oxygène.

7. Dispositif selon la revendication 1, **caractérisé en ce que** l'espace intérieur contient des moyens de dispersion de poudre de suie.

8. Dispositif selon l'une des revendications précédentes, **caractérisé en ce que** le moyen de transfert de volumes définis de gaz contient un appareil de dilution (11, 20).

9. Dispositif selon la revendication 8, **caractérisé en ce que** l'appareil de dilution est un dilueur (11) à carrousel.

10. Dispositif selon l'une des revendications précédentes, **caractérisé en ce que** le moyen de transfert de volumes défini de gaz comporte une tuyère critique, une soupape à aiguille ou un obturateur à iris.

11. Dispositif selon l'une des revendications précédentes, **caractérisé par** des moyens de régulation qui établissent une pression intérieure régulée.

12. Procédé de formation d'un gaz qui contient des particules de suie à propriétés définies et en quantité ou concentration définies de particules en suspension, dans un but de mesure ou d'étalonnage,
le combustible et un gaz porteur étant apportés dans un espace intérieur et des particules de suie en suspension dans un gaz étant formées dans l'espace intérieur à partir du combustible,
**caractérisé en ce que**
l'espace intérieur est découplé de l'environnement de telle sorte qu'une pression différente de la pression atmosphérique puisse y être appliquée et
**en ce que** pour former le gaz contenant des particules de suie de propriétés définies et en quantité ou concentration définies, des volumes de gaz définis sont transférés depuis l'espace intérieur jusque dans un ensemble de mesure.

13. Procédé selon la revendication 12, **caractérisé en ce que** les particules de suie sont formées en brûlant partiellement le combustible dans une flamme formée dans l'espace intérieur, la flamme étant de préférence une flamme à diffusion.

14. Procédé selon la revendication 13, **caractérisé en ce que** la flamme est maintenue dans une chambre de combustion et **en ce que** les particules de suie formées sont amenées depuis l'espace intérieur jusque dans une évacuation (3) de suie couplée à la chambre de combustion, un gaz d'extinction étant apporté dans l'évacuation de suie.

15. Procédé selon la revendication 12, **caractérisé en ce que** pour former les particules de suie, le combustible est mélangé avec un gaz porteur qui est chauffé de telle sorte que le combustible soit pyrolysé.

16. Procédé selon la revendication 15, **caractérisé en ce que** le gaz porteur est chauffé en chauffant au moins localement une paroi délimitant l'espace intérieur.

17. Procédé selon la revendication 12, **caractérisé en ce que** pour former les particules de suie flottant dans un gaz, la poudre de suie est dispersée dans l'espace intérieur.

18. Procédé selon l'une des revendications 12 à 17, **caractérisé en ce qu'**une pression différente de la pression atmosphérique peut être appliquée dans l'espace intérieur et **en ce que** cette pression est régulée.

19. Procédé de test de filtres ou d'éléments de filtre, dans lequel un gaz contenant des particules de suie est formé en appliquant un procédé selon l'une des revendications 11 à 18, éventuellement en y mélangeant au moins un autre gaz, et est amené au filtre à tester ou à l'élément de filtre à tester.

20. Procédé selon la revendication 19, **caractérisé en ce que** la concentration de suie dans le gaz est mesurée en aval du filtre ou de l'élément de filtre dans la direction d'écoulement.

21. Procédé selon les revendications 19 ou 20, **caractérisé en ce que** la perte de charge qui s'établit dans l'écoulement de gaz à travers le filtre ou l'élément de filtre est mesurée.
